Europäisches Patentamt

European Patent Office

Office européen des brevets

(11) Publication number: 0 202 730 A2

# (12) EUROPEAN PATENT APPLICATION

(21) Application number: 86301195.3

(22) Date of filing: 20.02.86

(51) Int. Cl.⁴: **A 01 K 63/00**
**A 01 K 75/00**

(30) Priority: 15.05.85 GB 8512268

(43) Date of publication of application:
26.11.86 Bulletin 86/48

(84) Designated Contracting States:
BE DE FR GB IT NL

(71) Applicant: H. STEADE & SONS LIMITED
Steade-Fast Works 53 Catley Road
Sheffield S9 5JF(GB)

(72) Inventor: Steade, Donald
103 Driver Street
Woodhouse Mill Sheffield S13 9WQ(GB)

(74) Representative: Ford, Michael Frederick et al,
MEWBURN ELLIS & CO. 2/3 Cursitor Street
London EC4A 1BQ(GB)

(54) Angler's keep net.

(57) An angler's keep net of elongate generally cylindrical form with a series of hoops (10) to which the netting (12) is secured at spaced locations along its length.

So that the lowermost end of the net can very conveniently be opened or closed, the tube of netting is open ended and the two lowermost hoops can be connected together one closely overlying the other when the length of netting between them has been twisted.

FIG.1

Croydon Printing Company Ltd.

- 1 -

"Angler's keep net".

The invention relates to an angler's keep net, that is to say to an elongate generally cylindrical net in which a competition angler will store his catch until the end of a match, at which time the individual catches are weighed and the fish returned to the stream or pond.

It has been realised that the fish can suffer injury if they are not treated as gently as possible during the operation of weighing them and of then returning them to the stream of pond concerned.

The invention as claimed is intended to provide a remedy. It solves the problem of how to design an angler's keep net which in a very simple manner is capable of being opened at the bottom end to enable the fish to swim out rather than be tipped out of the upper end of. the net thereby averting any risk of injury to the fish.

The advantages offered by the invention are mainly that the fish are safeguarded against injury when being returned to the stream or pond and also that the net can be either closed or opened at its bottom end in a very simple and convenient manner.

Various ways in which the invention can be carried out are described in detail below by way of example only and with reference to the accompanying drawings, of which:-

Figure 1 is a side view of an angler's keep net embodying the invention,

Figure 2 is a similar view showing the bottom end of the net being closed,

Figure 3 is a view of the net with its bottom end in closed condition, and

Figures 4 and 5 are detail views which will presently be referred to when describing possible modifications.

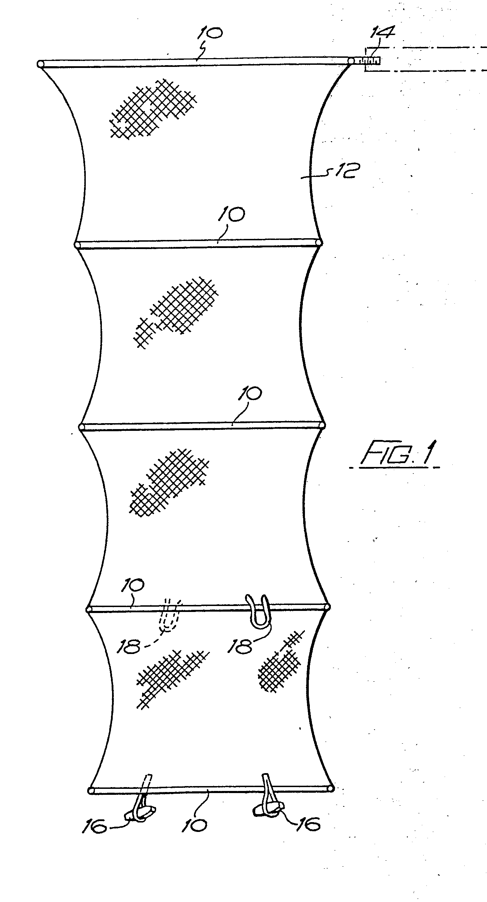

Referring now in particular to Figure 1 of the drawings, the keep net there illustrated is of generally cylindrical form, being held in that shape by a series of hoops 10. The open ended tube of netting 12 is stitched to the hoops at spaced locations along its length, the hoop at the upper end of the net, which is of somewhat larger diameter than the other hoops, being provided with means including a screwthreaded stud 14 for the attachment of a handling rod 15 shown in chain-dotted lines.

The two lowermost hoops 10 are provided with co-operable means whereby the two hoops can be connected together one closely overlying the other as will presently be described. In this illustrated embodiment, the co-operable means are constituted by a pair of oppositely disposed toggle members 16 secured to the lowermost hoop and a pair of oppositely disposed loops 18 secured to the next adjacent hoop (but it will be understood that the loops could equally well have been secured to the lowermost hoop and the toggle members secured to the next adjacent hoop). To be precise, the respective loops and toggle members have been attached by stitching to areas of the net adjacent to or wrapping around the hoops concerned, but to all intents can be considered to be secured to the hoops.

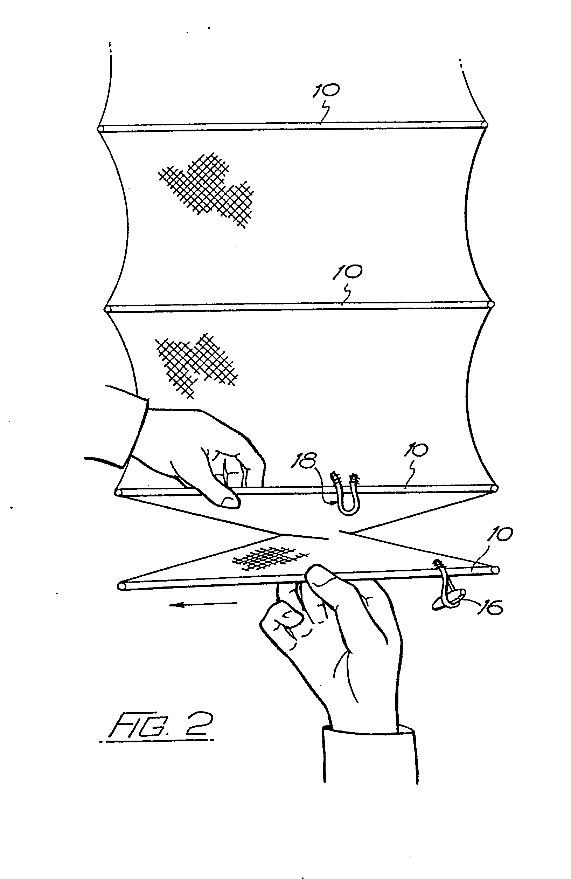

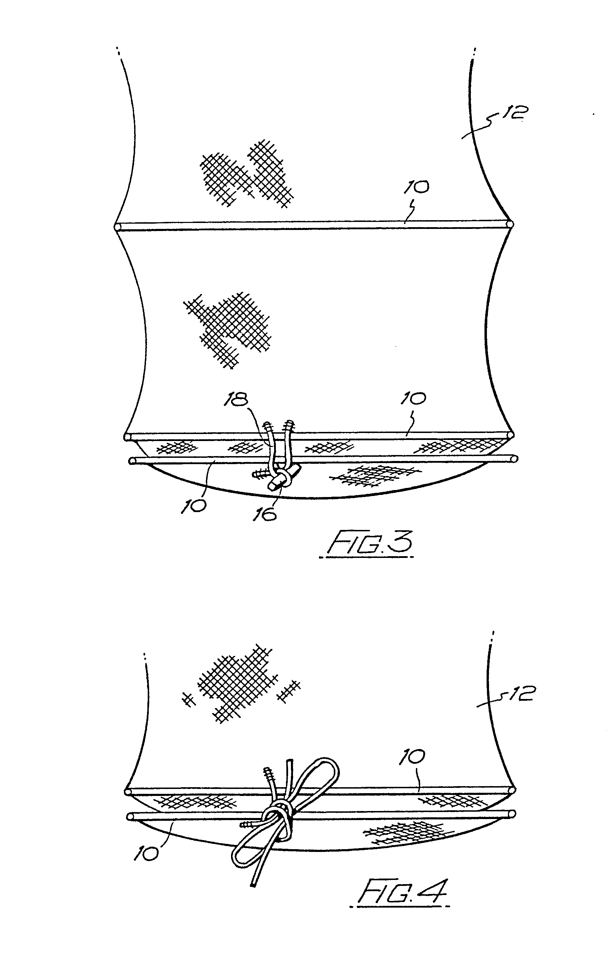

The arrangement is such that when it is desired to close the bottom end of the keep net, this can be done by turning the lowermost hoop relative to the next adjacent hoop, as indicated in Figure 2, so that the tubular length of netting between them is twisted. The exact amount is not important but it has been found that one full turn is sufficient to very effectively close the bottom end of the net. The two lowermost hoops can then be secured together by means of the toggles and loops as shown in Figure 3.

In use of the keep net, with the bottom end closed, there is little or no danger of the net opening by inadvertence and letting the fish escape. The weight of fish in the net is supported by the netting material and there is very little stress on the co-operable means by which the two lowermost hoops are connected together. However, it is a very simple matter to open the net to allow the fish to escape when required. When the co-operable means (constituted in the illustrated example by the toggles and loops) have been unfastened, the lowermost hoop can simply be turned relative to the remainder of the net to untwist the length of netting between the two lowermost hoops. The lower end of the keep net is thus immediately open. If this is done whilst the net is in the water being fished, as it generally will be, the fish can then swim away without having suffered any injury by being tumbled about.

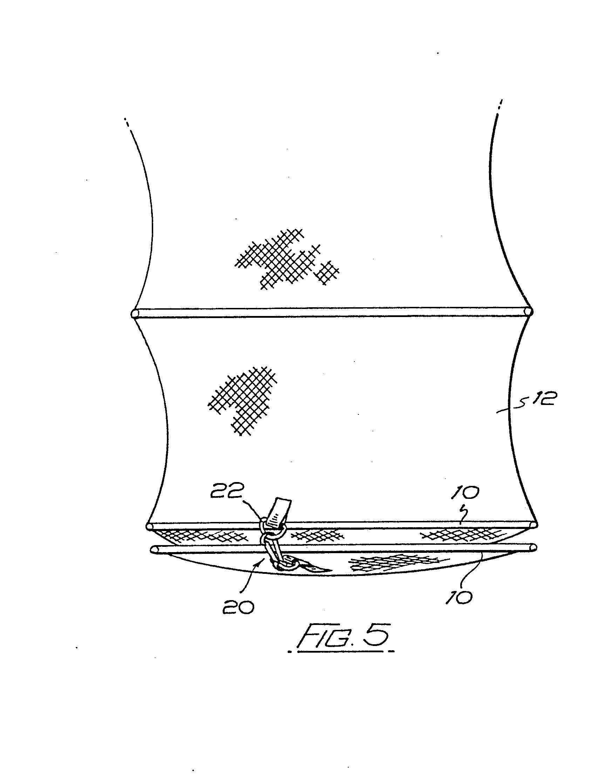

Various modifications may be made, particularly to the means employed for connecting together the two lowermost hoops. Other kinds of co-operable means could be secured to the respective hoops, for example press stud type fastenings or in fact lengths of cord or tape which can simply be tied together as shown in Figure 4. However, entirely different means of connection could be employed if desired; for example two or more safety pin type fasteners could be employed. On the other hand, a pair of fairly stout spring clips might possibly be used for connecting together the two lowermost hoops. Whatever the means employed they must be absolutely secure against the bottom end of the keep net opening by inadvertence. With this in mind, the fastening means illustrated in Figure 5 are particularly suitable in being very quickly connected and disconnected but yet being absolutely safe against opening by inadvertence. In Figure 5 the fastening means are shown to be constituted by a pair of oppositely disposed spring clips 20 secured to the lowermost hoop (or to areas of the net alongside the lowermost hoop) and by a pair of D-rings 22 secured to the next adjacent hoop (or to areas of the net alongside the next adjacent hoop).

CLAIMS:

1.    An angler's keep net of elongate generally cylindrical form and provided with a series of hoops (10) to which, in its free condition, an open ended tube of netting (12) is secured at spaced locations along its length, characterised in that means are provided whereby the two lowermost hoops (10) can be connected together one closely overlying the other so that the bottom end of the keep net can be closed by turning the lowermost hoop (10) relative to the next adjacent hoop (10), the tubular length of netting (12) between them thereby becoming twisted sufficiently to effectively close the bottom end of the net, the two lowermost hoops (10) then being connected together to prevent the net becoming untwisted until the fish are to be released.

2.    An angler's keep net according to claim 1, further characterised in that  the means whereby the two lowermost hoops (10) can be connected together one closely overlying the other are constituted by co-operable means secured to the respective hoops.

3.    An angler's keep net according to claim 2, further characterised in that the co-operable means secured to the respective hoops are constituted by two or more toggle members (16) secured to one of the two hoops (10) and a similar number of loops (18) secured to the next adjacent hoop (10) and capable of being engaged by the toggle members.

4.      An angler's keep net according to claim 1, further characterised in that the means whereby the two lowermost hoops (10) can be connected together one closely overlying the other are constituted by at least two safety pin type fasteners which can be engaged with the netting adjacent the respective hoops or by at least two stout spring clips which can be snapped over connected portions of the two hoops.

5.      An angler's keep net according to any one of the preceding claims, further characterised in that the uppermost hoop of the keep net is connected or capable of being connected to one end of a handling rod (15).

6.      An angler's keep net according to claim 5, further characterised in that the uppermost hoop is connected or capable of being connected to one end of the handling rod by being provided with a screwthreaded stud (14) for engagement in a screwthreaded hole formed axially in the end of the handling rod (15).

7.      An angler's keep net according to any one of the preceding claims, further characterised in that the uppermost hoop (10) is of a somewhat larger diameter than the other hoops.

_FIG.1_

FIG. 2

_FIG.3_

_FIG.4_

_FIG. 5_